# EUROPÄISCHE PATENTSCHRIFT

(11) **EP 2 075 235 B1**
(45) Veröffentlichungstag und Bekanntmachung des Hinweises auf die Patenterteilung: **08.04.2020**
(21) Anmeldenummer: 09002247.6
(22) Anmeldetag: 18.02.2009
(51) Int. Cl.: C03B 25/02, F24C 15/04

(54) **Verfahren zur Herstellung eines Glasformteils und verfahrensgemass herstellbare Erzeugnisse**
Method for producing a glass moulded part and product created according to this method
Procédé de fabrication d'une pièce moulée en verre et produits pouvant être fabriqués selon ce procédé

(30) Priorität: 21.12.2007 DE 102007062979
(43) Veröffentlichungstag der Anmeldung: 01.07.2009
(73) Patentinhaber: Schott AG, 55122 Mainz (DE)
(72) Erfinder: Schmidbauer, Wolfgang Dr, 55126 Mainz (DE); Schwarz, Erhard, 07743 Jena (DE); Haustein, Holger, 07768 Orlamünde (DE); Gabelmann, Torsten, 65199 Wiesbaden (DE)
(74) Vertreter: Herden, Andreas F.

(56) Entgegenhaltungen:
- WO-A1-03/023287
- DE-A1- 1 596 365
- DE-A1- 10 105 543
- FR-A- 1 012 086
- GB-A- 1 144 911

## Beschreibung

Die Erfindung betrifft allgemein Glasgegenstände und deren Herstellung. Insbesondere betrifft die Erfindung Glasgegenstände für Anwendungen mit hoher thermischer Belastung.

Glaselemente, die hohen thermischen Belastungen ausgesetzt sind, finden sich bei Haushaltsgeräten unter anderem in Form von Innenscheiben von Garöfen.

Garöfen weisen einen Garraum mit einer Beschickungsöffnung auf, die durch eine Tür verschließbar ist. In der Tür ist im allgemeinen ein Sichtfenster angeordnet. Moderne Garöfen sind bereits vielfach mit einer pyrolytischen Selbstreinigung ausgestattet. Bei der pyrolytischen Selbstreinigung werden Garrückstände bei Pyrolysetemperaturen von mindestens 480°C zu Asche zersetzt.

Aufgrund der bei der Pyrolyse eingesetzten hohen Temperaturen im Garraum der Haushalts-Gargeräte erhitzt sich auch die Gargerätetür und damit das Sichtfenster entsprechend. Das Sichtfenster seinerseits umfasst typischerweise ein Glasscheibenpaket mit mindestens zwei Glasscheiben und einem im allgemeinen abgedichteten Zwischenraum zwischen den Scheiben, um eine Wärmeisolation zu erreichen.

Um den gewünschten pyrolytischen Reinigungseffekt im gesamten Garraum zu erzielen, sollte auch die zum Garraum gewandte Seite der Innenscheibe der Gargerätetür möglichst dieselben Temperaturen erreichen, wie der Garraum selbst. Wegen dieser Temperaturbelastungen werden daher bei Sichtfenstern für Gargeräte, insbesondere für Backöfen mit pyrolytischer Selbstreinigung hochwertigere Gläser für die Türscheiben, besonders für die Innenscheibe eingesetzt.

Die DE 196 38 241 A1 beschreibt eine Gargerätetür für einen Backofen mit pyrolytischer Selbstreinigung, welche ein Glasscheibenpaket aufweist, bei welchem die zur Ofenmuffel weisende Seite, beziehungsweise die Innenscheibe als ebenes Sichtfenster mit geringem Wärmeausdehnungskoeffizienten ausgebildet ist.

Beispielsweise kann dazu Glaskeramik als Fenstermaterial verwendet werden. Die ebene Innenscheibe überdeckt die Beschickungsöffnung des Backofens vollständig und bildet eine Kontaktfläche zu einem Anlageflansch, beziehungsweise erstreckt sich über eine Dichtung zwischen den Glasscheiben des Glasscheibenpakets hinaus. Derartige Scheiben werden auch als Vollflächenscheiben bezeichnet.

Aus der DE 199 50 819 A1 ist weiterhin eine Gargerätetür mit einem Glasscheibenpaket bekannt, bei welchem die Innenscheibe aus Borosilikatglas oder Glaskeramik bestehen kann. Die Innenscheibe überdeckt ebenfalls die Beschickungsöffnung des Garraums vollständig und bildet eine Kontaktfläche zu einem Anlageflansch, beziehungsweise erstreckt sich über dessen Dichtung hinaus. Die Innenscheibe ist aber nicht vollständig eben, sondern weist eine zum Garraum hin weisende Ausformung aus, um Spannungszustände infolge des Temperaturgradienten zwischen dem relativ gesehen kühleren Randbereich und dem heißeren Innen- oder Mittenbereich der Innenscheibe zu kompensieren. Die Innenscheibe ist demgemäß in den Innenbereich hinein bombiert. Derartige Innenscheiben mit Ausformungen werden im Folgenden auch als "Bauchscheiben" bezeichnet.

Die DE 101 43 925 A1 beschreibt ebenfalls eine Backofentür mit beabstandeten Scheiben. Die Scheiben werden dabei in einem rahmenförmigen, emaillierten Blechteil unter Abstand zueinander und unter Einschluß eines Zwischenraums gehaltert. Das Blechteil dichtet den Zwischenraum ab. Bei dieser Anordnung kann es bei einer pyrolytischen Selbstreinigung aufgrund der Wärmeabfuhr durch das Blechteil im Randbereich der Innenscheibe zu einem nicht optimalen Reinigungsverhalten kommen.

Die DE 101 05 543 A1 beschreibt eine mehrscheibig aufgebaute Gargerätetür mit einer Vollflächen-Innenscheibe. Der Rand der Innenscheibe ist hier umlaufend wannenförmig abgekantet und mit dem Rand auf der Frontscheibe befestigt. Auf diese Weise kann das ansonsten zwischen der Frontscheibe und der Innenscheibe angeordnete, zur Abdeckung des Zwischenraums dienende, umlaufend emaillierte Blechformteil entfallen, was die Reinigungsfreundlichkeit erhöht.

Durch die in den Garraum weisende Ausformung wird verglichen mit einer ebenen Glasscheibe der mittige Bereich der Scheibe jedoch tendenziell heisser als der Randbereich. Hierbei kommt hinzu, daß verformte Scheiben gegenüber einem ebenen Ursprungsglas im allgemeinen eine niedrigere thermische Schockbeständigkeit aufweisen.

Es hat sich in der Praxis gezeigt, daß durch eine solche wannenartige Ausbildung der Innenscheibe zudem die thermische Belastung erheblich erhöht wird. Die erhöhte thermische Belastung sollte aber keinen Ausfall der Innenscheibe zur Folge haben. Ein Belastungstest, dem Innenscheiben standhalten sollten, wird in der EN 60335-2-6 ("Sicherheit elektrischer Geräte für den Hausgebrauch und ähnliche Zwecke") beschrieben.

In Teil 2-6 ("Besondere Anforderungen an ortsfeste Herde, Kochmulden, Backöfen und ähnliche Geräte"), Abschnitt 21.104 dieser Norm wird eine nachfolgend erläuterte Abschreckprüfung der Innenscheibe beschrieben. Nach Abschnitt 21.104 sollen Glaseinsätze von Backofentüren mit waagerechten Scharnieren den wahrscheinlich im sachgemäßen Gebrauch auftretenden thermischen Belastungen standhalten, was wie folgt geprüft wird: "Das Gerät wird betrieben, wie in Abschnitt 11 festgelegt. Die Tür wird dann geöffnet und 0,2 Liter Wasser, das eine Temperatur von 15±5 °C hat, werden innerhalb von 5 Sekunden auf die Mitte des Glaseinsatzes gegossen. Das Glas darf nicht brechen."

Thermisches Vorspannen erhöht die thermische und mechanische Stabilität eines Glasformteils und ist beispielsweise in der DE 101 43 925 A1 beschrieben. Durch das Vorspannen wird sowohl eine mechanische, als auch eine thermische Erhöhung der Belastbarkeit erreicht.

Allerdings ist die Vorspannung durch Temperatureinwirkung reversibel. Aufgrund der bestimmungsgemäßen Betriebsweise, beziehungsweise dem Betrieb gemäß dem vorstehend erwähnten Abschnitt 11 der EN 60335-2-6, Teil 2-6 wird die thermische Vorspannung weitestgehend wieder abgebaut, so daß die Belastungsprüfung gemäß Abschnitt 21.04 nicht sicher erfüllt wird.

Der Erfindung liegt daher die Aufgabe zugrunde, die oben genannten Probleme zu lösen. Demgemäß soll mit der Erfindung eine Innenscheibe bereitgestellt werden, die in ihrem Verhalten gegenüber plötzlich auftretenden Temperaturschockbelastungen deutlich verbessert ist und die oben beschriebene Normprüfung gemäß EN 60335-2-6, Teil 2-6, Abschnitt 21.04 sicher erfüllt.

Diese Aufgabe wird durch den Gegenstand der unabhängigen Ansprüche gelöst. Vorteilhafte Ausgestaltungen und Weiterbildungen der Erfindung sind in den jeweiligen abhängigen Ansprüchen angegeben.

Demgemäß sieht die Erfindung ein Verfahren zur Herstellung eines Glasgegenstands oder Glaselements mit verbesserter Thermoschockfestigkeit vor, bei welchem ein Glasgegenstand geformt wird, welcher eine erste Seite und eine gegenüberliegende zweite Seite aufweist, wobei der Glasgegenstand ausgehend von einer Oberflächentemperatur unterhalb des Erweichungspunkts auf der ersten Seite oberflächlich erwärmt wird, bis die Viskosität einen Wert von 10^{(7,65±2)}, vorzugsweise 10^{(7,65±1)} Poise erreicht oder unterschreitet, so daß die Thermoschockfestigkeit des Glasgegenstandes auf der ersten Seite erhöht wird. Als Erweichungspunkt wird im Sinne der Erfindung und gemäß der Norm ISO 7884-1 die Temperatur verstanden, bei welcher die Viskosität 10^{7,65} Poise beträgt. Ein Abschrecken, wie es bei einer thermischen Vorspannung durchgeführt wird, entfällt.

Unter einer oberflächlichen Erwärmung wird eine Erwärmung mit einem Temperaturgradienten senkrecht zur erwärmten Seite verstanden. Die Erwärmung wird insbesondere so durchgeführt, daß zumindest ein Teil des Gegenstands unter der erwärmten Oberfläche, vorzugsweise die gegenüberliegende, zweite Seite des Glasgegenstands auf einer Temperatur unterhalb des Erweichungspunktes verbleibt. Auf diese Weise wird die Formstabilität des hergestellten Glasgegenstands sichergestellt. Vorzugsweise wird zur Gewährleistung der Formstabilität von einer Temperatur des Glasgegenstands zu Beginn der Erwärmung ausgegangen, bei welcher die Viskosität mindestens 10⁹ Poise, besonders bevorzugt zumindest 10¹¹ Poise, insbesondere bevorzugt zumindest 10¹² Poise beträgt.

Es hat sich überraschend gezeigt, daß die erfindungsgemäße kurzfristige oberflächliche Erwärmung, bei welchen auf der Glasoberfläche Temperaturen im Bereich des Erweichungspunkts erreicht werden, zu einer signifikanten und insbesondere auch nicht reversiblen Erhöhung der Temperaturunterschieds-, beziehungsweise Abschreckfestigkeit des Glasgegenstands führen.

Dabei ist außerdem überraschend, daß äußerlich bereits vor dem erfindungsgemäßen Aufheizen der Oberfläche keine sichtbaren Oberflächendefekte erkennbar sind. Auch wird die Oberfläche nicht, wie etwa beim Feuerpolieren aufgeschmolzen. Vielmehr verbleibt die Viskosität des Glasgegenstands in Weiterbildung der Erfindung bei der Erwärmung der ersten Seite an der Oberfläche größer als 10⁴ Poise, vorzugsweise größer als 10⁵ Poise, besonders bevorzugt größer als 10⁶ Poise. Die Temperatur verbleibt also im Unterschied zum Feuerpolieren unterhalb des gemäß ISO 7884-1 definierten Verarbeitungspunkts und wird nicht aufgeschmolzen.

Durch das erfindungsgemäße Verfahren wird die Oberfläche gerade so heiß gemacht, daß kleinste Oberflächendefekte ausgeheilt werden, auf der anderen Seite auch eine ausreichende Formstabilität erhalten bleibt.

Besonders geeignet ist die Erfindung zur Anwendung auf Glasscheiben als Glasgegenstände. Die Glasscheibe muß dabei nicht vollständig eben sein. Vielmehr ist in bevorzugter Ausgestaltung der Erfindung die Scheibe zu einem Glasformkörper umgeformt. Wie bereits in der Erläuterung zum Stand der Technik dargelegt wurde, tritt besonders bei Glasscheiben mit wannenförmig umgebogenem Rand und der Verwendung einer solchen Glasscheibe als Innenscheibe eines Gargeräts das Problem einer verminderten thermischen Abschreckfestigkeit auf. Durch die erfindungsgemäße Behandlung der konvexen, beziehungsweise nach außen gewölbten Seite eines solchen als Innenfenster verwendeten wannenförmigen Glasformkörpers kann dann die Thermoschockbeständigkeit so weit erhöht werden, daß die Glasscheibe einen Test nach EN 60335-2-6 sicher besteht.

Die Erfindung sieht daher auch eine mit dem erfindungsgemäßen Verfahren herstellbare Innenscheibe eines Gargeräts vor, welche eine Glasscheibe mit einer Innenseite und einer Außenseite umfasst, wobei der Rand der Innenscheibe wannenförmig umgebogen ist, so daß die Innenseite der Innenscheibe konvex geformt ist, wobei zumindest der Mittenbereich der Innenseite der Innenscheibe durch oberflächliche Erwärmung auf eine Temperatur, bei welcher die Viskosität einen Wert von 10^{(7,65±2)}, vorzugsweise 10^{(7,65±1)} Poise erreicht oder unterschreitet, behandelt ist, so daß die Scheibe einem Abschrecktest ohne Brechen standhält, bei welchem die Innenscheibe durch einen auf zumindest 240°C aufgeheizten Raum, welcher durch die Innenseite der Innenscheibe begrenzt wird, aufgeheizt wird, und wobei dann 0,2 Liter Wasser mit einer Temperatur von 15±5 °C innerhalb von 5 Sekunden auf die Mitte der Innenseite gegossen werden. Der Mittenbereich, welcher vom wannenförmig umgebogenen Rand umgeben ist, kann eben oder auch gewölbt sein.

Mit dieser Innenscheibe kann dann ein Glasscheibenpaket insbesondere für eine Tür eines Gargeräts hergestellt werden, welches neben der Innenscheibe eine weitere Scheibe umfasst, wobei die Innenscheibe mit dem wannenförmig umgebogenen Rand an der weiteren Scheibe befestigt ist, so daß ein Zwischenraum zwischen den beiden Scheiben gebildet wird. Selbstverständlich können, beispielsweise für eine bessere Wärmeisolation, auch noch weitere Scheiben vorgesehen sein.

Es hat sich gezeigt, daß eine derartige erfindungsgemäße Innenscheibe im allgemeinen sogar Tests mit noch weitergehenden Bedingungen, als sie im Test gemäß der EN 60335-2-6 vorgeschrieben sind, ohne Bruch übersteht. So besteht gemäß einer Weiterbildung der Erfindung die Innenscheibe den vorstehend beschriebenen Abschrecktest auch, nachdem die Innenscheibe ein- oder mehrmals auf zumindest 480°C aufgeheizt und wieder abgekühlt wurde. Dies sind die Temperaturen, die bei einer pyrolytischen Selbstreinigung im Innenraum des Gargeräts eingesetzt werden. Die erfindungsgemäße Innenscheibe ist demnach nicht nur für herkömmliche Haushalts-Gargeräte, sondern auch für solche mit pyrolytischer Selbstreinigung geeignet und die Verbesserung der Abschreckfestigkeit ist auch unter diesen Bedingungen nicht reversibel.

Auch hinsichtlich der Temperaturen, die beim Abschrecktest im Garraum angewendet werden, vermag eine erfindungsgemäße Innenscheibe die Mindestanforderungen gemäß der EN 60335-2-6 deutlich zu übertreffen. So hält gemäß noch einer Weiterbildung der Erfindung die Innenscheibe auch einem Abschrecktest ohne Brechen stand, bei welchem die Innenscheibe durch einen auf 300°C aufgeheizten Raum, welcher durch die Innenseite der Innenscheibe begrenzt wird, aufgeheizt wird, und wobei dann 0,2 Liter Wasser mit einer Temperatur von 15±5 °C innerhalb von 5 Sekunden auf die Mitte der Innenseite gegossen werden.

Da bei der Anwendung als Innenscheibe eines Gargeräts der umgebogene Rand im allgemeinen einer niedrigeren Temperaturbelastung ausgesetzt ist, ist es nicht notwendig, auch den wannenförmig umgebogenen Rand erfindungsgemäß zur Verbesserung der Thermoschockbeständigkeit zu erwärmen. Besonders günstig ist, es, wenn der wannenförmig umgebogene Rand bei einer Temperatur verbleibt, bei welcher die Viskosität mindestens einen Wert von 10¹³ Poise erreicht. Diese Viskosität sorgt dafür, dass der Randbereich außerordentlich formstabil bleibt.

Die Erwärmung wird sehr schnell durchgeführt, um eine möglichst auf oberflächennahe Bereiche beschränkte Viskositätsabsenkung zu erreichen. Dazu wird die Erwärmung ausgehend von einer Oberflächentemperatur unterhalb des Erweichungspunkts bis zu einer Temperatur, bei welcher die Viskosität einen Wert von 10^{(1,15±2)} Poise erreicht oder unterschreitet, in einem oder mehreren Erwärmungsschritten erfolgen, deren Dauer gemessen an einer Stelle der Oberfläche jeweils kürzer als 2 Sekunden beträgt. Die Gesamtdauer der Erwärmung kann dabei auch länger sein. Dies ist dann der Fall, wenn mit einer lokalen Wärmequelle die Oberfläche überstrichen wird. Lokal wird beim Überstreichen ein schneller Temperaturanstieg erreicht, während die Gesamtdauer demgegenüber durch die Zeit des ein- oder mehrmaligen Überstreichens bestimmt wird.

Eine schnelle Erwärmung auf die gewünschte Temperatur kann besonders einfach dann erzielt werden, wenn der Glasgegenstand bereits zu Beginn des Erwärmens der ersten Seite mit erhöhter Temperatur, vorzugsweise mit einer Temperatur von zumindest 200°C, besonders bevorzugt bei einer Temperatur im Bereich des unteren Kühlpunkts oder oberhalb des unteren Kühlpunkts bereitgestellt wird. Der untere Kühlpunkt ist die Temperatur, bei welcher die Viskosität des Glases einen Wert von 10^{14,5} Poise hat. Es bietet sich hierbei insbesondere auch an, wenn das Erwärmen bis zu einer Temperatur, bei welcher die Viskosität einen Wert von 10^{(7,65±2)}, vorzugsweise 10^{(7,65±1)} Poise erreicht oder unterschreitet, im Anschluß an einen Heißformungsprozess durchgeführt wird, wobei zu Beginn des Erwärmens noch Restwärme vom Heißformungsprozess vorhanden ist.

Die erfindungsgemäße Nachbehandlung des Glasgegenstands wird also besonders bevorzugt direkt im Anschluß an den vorhergehenden Heißformungsprozess durchgeführt. Bei einer ebenen Glasscheibe kann dies beispielsweise das Walzen des Glases sein. Bei einer wannenförmig ausgebildeten Glasscheibe mit wannenförmig umgebogenem Rand wird das Erwärmen gemäß dieser Ausgestaltung der Erfindung direkt im Anschluß an das Umformen der Glasscheibe durchgeführt. Für das Umformen ist besonders ein Umformziehprozess geeignet.

Ein schnelles oberflächliches Erwärmen auf die Temperatur im Bereich des Erweichungspunkts bei 10^{(7,65±1)} Poise oder darüber hinaus erfolgt in einfacher Weise durch Erwärmen mittels einer lokalen Heizquelle, mit welcher die erste Seite des Glasgegenstands überstrichen wird. Auf diese Weise lassen sich in einfacher Weise die für eine schnelle oberflächliche Erwärmung unter Beibehaltung der Formstabilität günstigen hohen Leistungen bereitstellen.

Die Heizquelle kann linienförmig sein, wobei die erste Seite quer zur Längsrichtung der linienförmigen Heizquelle überstrichen wird. Dies erspart gegenüber einer punktförmigen Heizquelle ein Abrastern in zwei Richtungen. Gemäß einer Weiterbildung dieser bevorzugten Ausgestaltung der Erfindung wird die erste Seite mit zumindest zwei hintereinander angeordneten linienförmigen Heizquellen, besonders bevorzugt in Form eines zumindest doppelreihigen Brenners überstrichen. Alternativ oder zusätzlich kann die erste Seite auch zumindest zweimal mit der linienförmigen Heizquelle überstrichen werden.

Diese Weiterbildung der Erfindung ist dann zweckmäßig, wenn ein einmaliges Überstreichen mit der Heizquelle nicht ausreicht, um die gewünschte Temperatur zu erreichen. Insbesondere kann dies aber auch günstig sein, wenn zu steile zeitliche Temperaturanstiegs-Profile vermieden werden sollen.

Die vorteilhaften hohen lokalen Heizleistungen können weiterhin dadurch erreicht werden, indem die Erwärmung der ersten Seite des Glasgegenstands durch einen Brenner mit zumindest einer Düse erfolgt, deren Flamme die erste Seite des Glasgegenstands überstreicht. Soll eine wie vorstehend beschriebene linienförmige Heizquelle mit Brenner realisiert werden, kann dazu ein Brenner mit einer linienförmigen Düse, beziehungsweise einer Schlitzdüse und/oder ein Brenner mit mehreren nebeneinander und/oder hintereinander in einer Reihe angeordneten Düsen eingesetzt werden.

Die Temperaturwechselbeständigkeit kann weiterhin noch erhöht werden, wenn der Glasgegenstand in einem Nachwärmeprozess, beispielsweise in einem Kühlofen, beziehungsweise Lehr-Ofen entspannt wird. Auch diese Maßnahme steht im Gegensatz zu einer thermischen Vorspannung zur Erhöhung der Temperaturwechselbeständigkeit, da vorhandene Spannungen im Gegenteil zu einer thermischen Vorspannung gerade beseitigt werden. Um mechanische Spannungen abzubauen, ist es dabei günstig, den Glasgegenstand bei einer Temperatur im Bereich oberhalb des unteren Kühlpunkts, vorzugsweise zwischen dem oberen und unteren Kühlpunkt zu halten. Der obere Kühlpunkt ist durch eine Viskosität des Glases von 10¹³ Poise definiert.

Im Nachwärmeprozess wird der Glasgegenstand langsam abgekühlt, bis im allgemeinen zumindest der untere Kühlpunkt in der Temperatur unterschritten wird. Der Spannungsabbau im Kühlofen erfolgt, während das Glas den Temperaturbereich zwischen oberen und unterem Kühlpunkt durchläuft. Dieser Prozess kann einige Minuten, bis zu einigen Stunden dauern, je nach Glasart und Geometrie des Glasgegenstands.

In einer erfindungsgemäß hergestellten Innenscheibe eines Gargeräts können weiterhin auch eine oder mehrere Öffnungen vorhanden sein, ohne die Temperaturwechselbeständigkeit deutlich zu beeinflussen. Diese Öffnungen können insbesondere im wannenförmig umgebogenen Rand vorgesehen sein, um einen von der konkaven, beziehungsweise einwärts gewölbten Seite umschlossenen Zwischenraum des Glasscheibenpakets einer Gargerätetür zu entlüften. Ebenfalls können die Öffnungen auch zur Befestigung der Innenscheibe dienen. Eine weitere Ausführungsform sieht vor, dass sich die Öffnungen im vom wannenförmig umgeformten Rand umgebenen Mittenbereich oder in einer gewölbten Fläche der Innenscheibe befinden.

Es ist besonders günstig, wenn bereits von einem Glasgegenstand mit einem Glas von hoher thermischer Schockbeständigkeit ausgegangen wird. Insbesondere werden darunter Gläser verstanden, welche einen thermischen Längenausdehnungskoeffizienten von
1^{∗} 10⁻⁶ K⁻¹ bis 10 ^{∗} (10⁻⁶)K⁻¹, vorzugsweise mit einem thermischen Längenausdehnungskoeffizienten im Bereich von 2^{∗} 10⁻⁶ K⁻¹ bis 5 ^{∗} 10⁻⁶ K⁻¹ aufweisen. Geeignet sind dabei unter anderem Borosilikatgläser.

Die Erfindung wird nachfolgend anhand von Ausführungsbeispielen und unter Bezugnahme auf die beigeschlossenen Zeichnungen näher erläutert. Dabei verweisen gleiche Bezugszeichen auf gleiche oder entsprechende Teile und Elemente. Es zeigen:
- Fig. 1: eine perspektivische Ansicht einer Innenscheibe einer Gargerätetür mit wannenförmig umgebogenem Rand, gesehen auf die konkave Seite,
- Fig. 2: eine perspektivische Ansicht der Scheibe, gesehen auf die konvexe Seite.
- Fig. 3: eine Anordnung zur Verbesserung der Thermoschockbeständigkeit durch Beflammen der Innenscheibe,
- Fig. 4: eine Querschnittansicht einer Gargerätetür, und
- Fig. 5: einen Viskositätsverlauf von Glas in Abhängigkeit von der Temperatur.

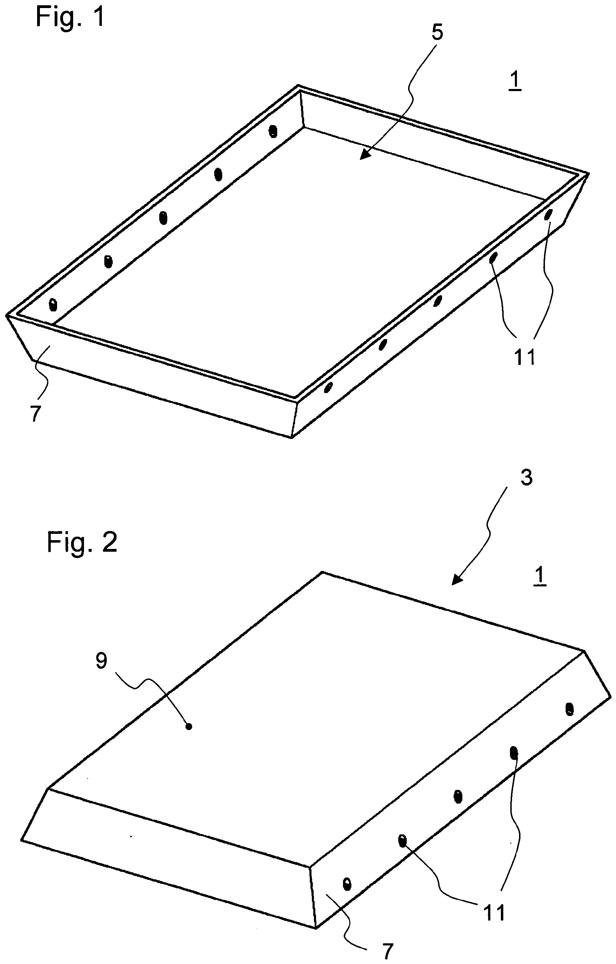

Die Fig. 1 und 2 zeigen jeweils perspektivische Ansichten einer Glasscheibe, wie sie erfindungsgemäß durch Erwärmen nachbehandelt und als Innenscheibe einer Gargerätetür oder eines Sichtfensters eines Gargeräts verwendet wird.

Die Innenscheibe 1 ist als Glasscheibe mit einer ersten Seite 3 und einer zweiten Seite 5 ausgestaltet, wobei der Rand 7 der Innenscheibe 1 wannenförmig umgebogen ist, so daß die erste Seite 3 der Innenscheibe konvex geformt ist. Die erste Seite 3 bildet bei der Gargerätetür dann die Innenseite, also die Seite, welche den Garraum begrenzt. Entsprechend bildet die konkav geformte Seite 5 die Außenseite der Innenscheibe 1. Der Mittenbereich 9 der Innenscheibe ist bei dem dargestellten Beispiel im wesentlichen eben. Es ist jedoch auch möglich, daß auch dieser Bereich eine Wölbung aufweist.

Im umgebogenen Rand 7 der Innenscheibe 1 sind außerdem mehrere Öffnungen 11 vorgesehen, welche die Belüfung des Zwischenraums zwischen der Innenscheibe 1 und einer weiteren Scheibe ermöglichen.

Die Innenscheibe 1 wird bevorzugt in einem Heißumformungsprozess aus einer ebenen Glasscheibe hergestellt. Als besonders geeignet für die Innenscheibe 1 ist Borosilikatglas aufgrund der vergleichsweise hohen Temperaturwechselbeständigkeit.

Um die innenseitige Temperaturwechselbeständigkeit der Innenscheibe 1 aber weiter derart zu verbessern, daß zumindest der Mittenbereich 9 der Innenseite 3 der Innenscheibe 1 einem Abschrecktest ohne Brechen standhält, bei welchem die Innenscheibe durch einen auf zumindest 240°C aufgeheizten Raum, welcher durch die Innenseite der Innenscheibe begrenzt wird, aufgeheizt wird, und wobei dann 0,2 Liter Wasser mit einer Temperatur von 15±5 °C innerhalb von 5 Sekunden auf die Mitte des Glaseinsatzes gegossen werden, wird eine Nachbehandlung des Mittenbereichs 9 der ersten Seite durchgeführt. Bei dieser Nachbehandlung wird der Mittenbereich ausgehend von einer Temperatur unterhalb des Erweichungspunkts oberflächlich auf eine Temperatur erwärmt, bei welcher die Viskosität einen Wert von 10^{(7,65±1)} Poise, also im Bereich des Erweichungspunkts bei 10^{7,65} Poise, erreicht oder unterschreitet, ohne daß nachfolgend das Glas abgeschreckt, beziehungsweise schnell gekühlt wird, wie dies im Unterschied zur Erfindung bei einer thermischen Vorspannung durchgeführt wird.

Die so durchgeführte Nachbehandlung führt überraschend zu einer nicht reversiblen Verbesserung der Thermoschockfestigkeit. Demgegenüber zeigen Untersuchungen, daß bei thermisch vorgespanntem Glas bei einer Temperatureinwirkung von 500°C nach nur einer Stunde nur noch 10% der vorher eingebrachten Spannung vorhanden sind. Eine derartig nachbehandelte Glasscheibe würde daher im Unterschied zur Erfindung im Einsatz in einem Gargerät, insbesondere in einem Gargerät mit pyrolytischer Selbstreinigung, bei welchem diese Temperaturen erreicht werden, sehr schnell seine verbesserte Thermoschockbeständigkeit einbüßen.

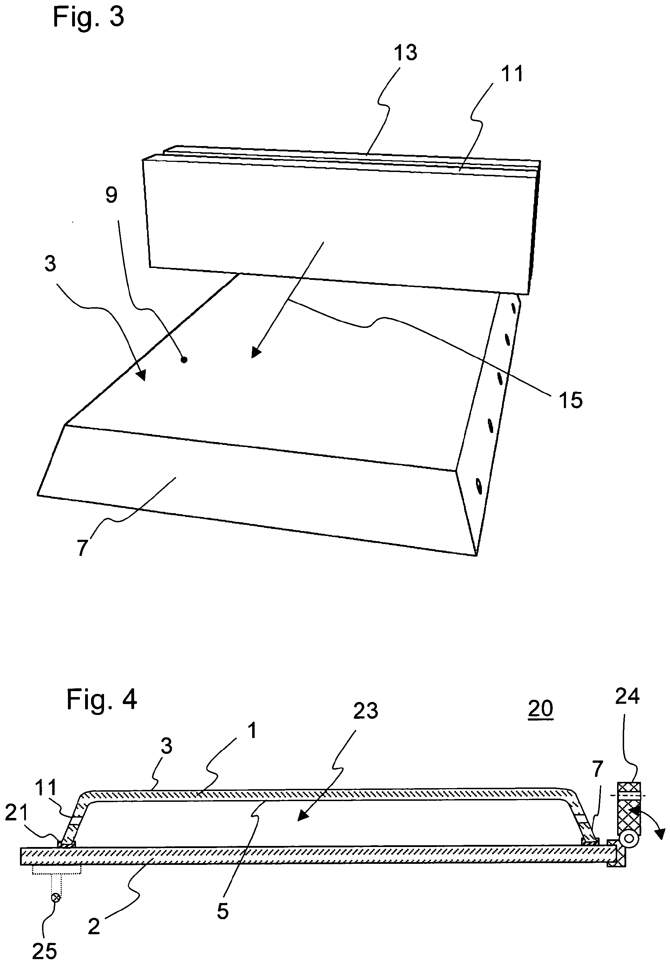

Fig. 3 zeigt die Anordung zur oberflächlichen Erwärmung des Mittenbereichs 9 der Seite 3 auf die entsprechenden Temperaturen. Es werden zwei hintereinander angeordnete linienförmige Brenner 11, 13 verwendet, welche die erste Seite 3 der Innenscheibe entlang einer Richtung 15 quer zur Längsrichtung der Brenner überfahren. Die Brenner können Schlitzdüsen oder mehrere nebeneinander in einer Reihe angeordnete punktuelle Brennerdüsen aufweisen, deren Flammen auf die Glasoberfläche gerichtet sind. Durch die hohe Leistung der Brenner und deren lokale Wirkung wird ein schneller Temperaturanstieg an der Oberfläche erzielt, ohne daß die Innenscheibe durchgehend eine Temperatur im Bereich des Erweichungspunkts erreicht, so daß die Innenscheibe hinreichend formstabil bleibt. Der umgebogene Rand 7 der Innenscheibe 1 wird dabei nicht beflammt, wodurch seine Formstabilität weiter erhöht wird. Vorzugsweise verbleibt der wannenförmig umgebogene Rand 7 bei einer Temperatur, bei welcher die Viskosität mindestens einen Wert von 10¹³ Poise erreicht. Demgemäß liegt die Temperatur des Rands 7 vorzugsweise im Bereich des oberen Kühlpunkts oder darunter.

Diese oberflächliche Erwärmung wird direkt im Anschluß an den Ziehprozess durchgeführt, mit welchem der umgebogene Rand der Innenscheibe hergestellt wird. Auf diese Weise wird die durch die vorhergehende Heißformung noch vorhandene Restwärme ausgenutzt, so daß einerseits zu hohe Temperaturgradienten senkrecht zur Oberfläche des Mittenbereichs 9 und damit zusätzlich auftretende Spannungen vermieden, andererseits auch der zur Erreichung der gewünschten Viskosität an der Oberfläche erforderliche Temperaturhub erniedrigt. Die Innenscheibe 1 kann dabei weiterhin ein- oder auch mehrmals überstrichen werden.

Als geeignet hat sich beispielsweise eine Brenneranordnung mit einer Leistung von 25 KW erwiesen. Der doppelreihige Brenner ist 350 mm lang und 40 mm breit und überfährt die Innenscheibe 1 in einem Abstand von 20 mm zu deren Oberfläche mit einer Geschwindigkeit von 60 Millimetern pro Sekunde. Damit wird eine schnelle Erwärmung der Oberfläche erreicht, wobei die Erwärmung, betrachtet jeweils an einer bestimmten Stelle der Oberfläche, in einem oder mehreren Schritten erfolgt, deren Dauer vorzugsweise jeweils kürzer als 2 Sekunden beträgt.

Die beflammte Glasoberfläche wird dabei gerade so heiß, dass kleinste Verletzungen ausgeheilt werden, andererseits auch eine ausreichende Formstabilität gewährleistet ist.

Fig. 4 zeigt in schematischer Querschnittansicht eine Gargerätetür mit einem Glasscheibenpaket 20. Die Innenscheibe 1 ist über eine Dichtung 21 am wannenförmig umgebogenen Rand 7 mit einer weiteren Glasscheibe 2 verbunden, wobei die konkave zweite Seite 5 der Innenscheibe zur weiteren Scheibe 2 weist. Auf diese Weise wird ein Zwischenraum 23 zwischen den beiden Scheiben 1, 2 gebildet. Dieser Zwischenraum dient zur Wärmeisolation und wird mittels der am Rand 7 vorhandenen Öffnungen entlüftet. Anders als in Fig. 4 dargestellt, kann das Glasscheibenpaket 20 auch noch weitere Glasscheiben umfassen.

Bei dem dargestellten Beispiel sind an der weiteren Scheibe 2 ein Scharnier zur schwenkbaren Montierung am Gargerät, sowie ein Griff 25 befestigt. Das Glasscheibenpaket 20 kann auf diese Weise ohne einen zusätzlichen Metallrahmen direkt als Gargerätetür eingesetzt werden.

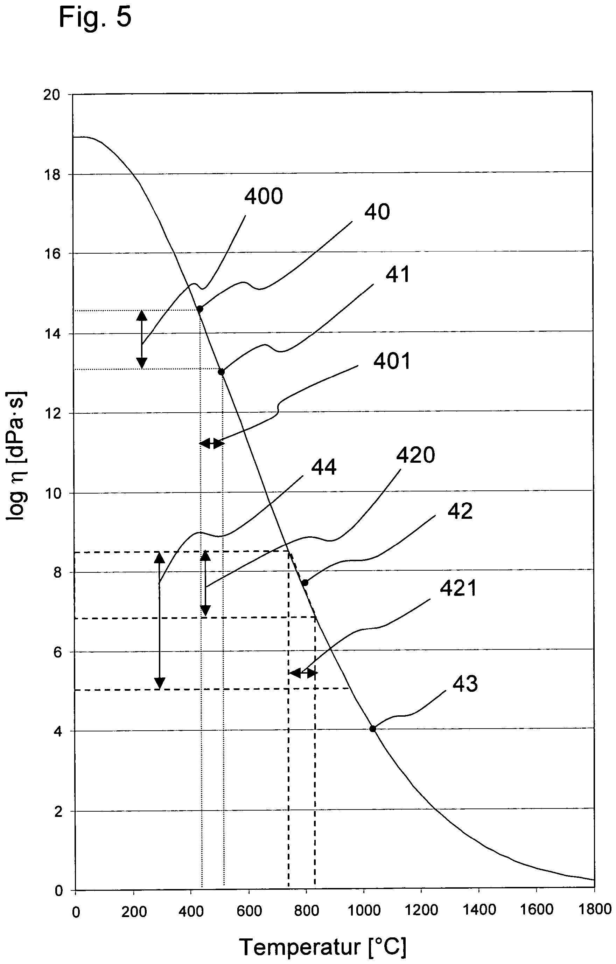

Fig. 5 zeigt ein Diagramm des Viskositätsverlaufes eines Glases in Abhängigkeit der Temperatur. Der Viskositätsverlauf ist fiktiv, ähnelt aber einem typischen Verlauf eines Borosilikatglases. Im Diagramm sind verschiedenen charakteristische Punkte des Viskositätsverlaufs gekennzeichnet. Der Punkt 40 ist der untere Kühlpunkt bei 10^{14,5} Poise und der Punkt 41 kennzeichnet den oberen Kühlpunkt bei 10¹³ Poise. Der Viskositätsbereich 400 zwischen diesen beiden Punkten ist der Transformationsbereich.

Das Glas hat zu Beginn der erfindungsgemäßen Erwärmung noch Restwärme von vorzugsweise zumindest 200 °C. Da bei der erfindungsgemäßen Nachbehandlung die Innenscheibe möglichst formstabil bleiben sollte, sind Viskositäten der Innenscheibe zu Beginn der Beflammung von mindestens 10⁹ Poise, besonders bevorzugt zumindest 10¹¹ Poise, insbesondere bevorzugt zumindest 10¹² Poise günstig. Die Temperatur kann dabei auch innerhalb oder oberhalb des Bereichs 401 liegen. Der Bereich 401 kennzeichnet dabei den zum Transformationsbereich 400 korrespondierenden Temperaturbereich.

Nach der erfindungsgemäßen Nachbehandlung der ersten Seite wird dieser Bereich 400 in einem langsamen Abkühlungs- und Nachwärmeprozess, vorzugsweise in einem Kühlofen abgekühlt, wobei die Viskosität den Transformationsbereich 400 zwischen den Kühlpunkten 41, 40 durchläuft. An die Beflammung schließt sich ein Nachwärmeprozess an, in dem Restspannungen abgebaut werden. Diese Nachbehandlung kann beispielsweise in einem Kühlofen durchgeführt werden, wobei die Innenscheibe langsam den Temperaturbereich durchläuft.

Die erste Seite 3 des Glases wird vorher zur erfindungsgemäßen Nachbehandlung so weit erwärmt, daß das Glas an der Oberfläche zumindest einen Viskositätsbereich 420 um den Erweichungspunkt 42 bei einer Viskosität 10^{7,65} Poise erreicht oder unterschreitet. Der Bereich 421 kennzeichnet den zum Bereich 420 korrespondierenden Temperaturbereich. Der Bereich 420 hat bei dem gezeigten Beispiel eine Ausdehnung von 10^{(7,65±1)} Poise.

Eine Feuerpolitur erfolgt unter Aufschmelzen der Oberfläche des Glases. Dabei wird das Glas mindestens bis auf den Verarbeitungspunkt 43 bei einer Viskosität von 10⁴ Poise, im allgemeinen noch auf deutlich höhere Temperaturen, beziehungsweise niedrigeren Viskositäten erwärmt, so daß die Oberfläche aufschmilzt.

Im Unterschied dazu wird gemäß der Erfindung die Oberfläche der ersten Seite 3 nicht aufgeschmolzen und die Viskosität verbleibt dabei unterhalb des Verarbeitungspunkts. Ein günstiger Bereich für die erfindungsgemäße Erwärmung der Glasoberfläche zur nicht reversiblen Verbesserung der Thermoschockbeständigkeit ist mit dem Bezugszeichen 44 bezeichnet und reicht von der oberen Viskositätsgrenze des Bereichs 420 bis zu 10⁵ Poise.

Es ist dem Fachmann ersichtlich, daß die Erfindung nicht auf die vorstehend beschriebenen Ausführungsbeispiele beschränkt ist, sondern vielmehr in vielfältiger Weise variiert werden kann. So kann mit dem erfindungsgemäßen Verfahren auch die Thermoschockbeständigkeit von anderen Glasscheiben oder Glasgegenständen als der in den Fig. 1 und 2 dargestellten Innenscheibe 1 in einfacher Weise verbessert werden. Möglich wäre es etwa auch, eine Bauchscheibe oder eine ebene Glasscheibe nachzubehandeln.

### Bezugszeichenliste:

- 1:: Innenscheibe,
- 2:: weitere Glasscheibe,
- 3:: erste Seite von 1,
- 5:: zweite Seite von 1,
- 7:: wannenförmig umgebogener Rand von 1,
- 9:: Mittenbereich von 1,
- 11:: Öffnungen in 7,
- 11, 13:: Brenner,
- 15:: Vorschubrichtung,
- 20:: Glasscheibenpaket,
- 21:: Dichtung,
- 23:: Zwischenraum zwischen 1, 2,
- 24:: Scharnier,
- 25:: Griff,
- 40:: unterer Kühlpunkt,
- 41:: oberer Kühlpunkt,
- 42:: Erweichungspunkt,
- 43:: Verarbeitungspunkt,
- 44:: Günstiger Viskositätsbereich,
- 400:: Transformationsbereich,
- 401:: Zu 400 korrespondierender Temperaturbereich,
- 420:: Viskositätsbereich um 42,
- 421:: zu 420 korrespondierender Temperaturbereich.

## Patentansprüche

1. Verfahren zur Herstellung einer Glasgegenstands in Form einer Gargeräte-Innenscheibe mit verbesserter Thermoschockfestigkeit, bei welchem ein Glasgegenstand geformt wird, welcher eine erste Seite (3) und eine gegenüberliegende zweite Seite (5) und einen wannenförmig umgebogenen Rand (7) aufweist, **dadurch gekennzeichnet, daß** der Glasgegenstand ausgehend von einer Oberflächentemperatur unterhalb des Erweichungspunkts (42) auf der ersten Seite (3) oberflächlich erwärmt wird, bis die Viskosität einen Wert von 10^{(6,65±2)} Pas (=10^{(7,65±2)} Poise ) erreicht oder unterschreitet, so daß die Thermoschockfestigkeit des Glasgegenstand auf der ersten Seite (3) erhöht wird, wobei die Erwärmung ausgehend von einer Oberflächentemperatur unterhalb des Erweichungspunkts (42) bis zu einer Temperatur, bei welcher die Viskosität einen Wert von 10 (6,65±2)Pas (=10 ^{(7,65±2)} Poise) erreicht oder unterschreitet, in einem oder mehreren Erwärmungsschritten erfolgt, deren Dauer gemessen an einer Stelle der Oberfläche jeweils kürzer als 2 Sekunden beträgt und wobei die Erwärmung mittels einer lokalen Heizquelle erfolgt, mit welcher die erste Seite des Glasgegenstands überstrichen wird.

2. Verfahren gemäß dem vorstehenden Anspruch, **dadurch gekennzeichnet, daß** der Glasgegenstand mit einem Temperaturgradienten senkrecht zur Oberfläche erwärmt wird, so daß zumindest ein Teil des Gegenstands unter der erwärmten Oberfläche, vorzugsweise die gegenüberliegende, zweite Seite (5) des Glasgegenstands auf einer Temperatur unterhalb des Erweichungspunktes (42) verbleibt.

3. Verfahren gemäß dem vorstehenden Anspruch, **dadurch gekennzeichnet, daß** die Viskosität des Glasgegenstands auf der ersten Seite (3) bei der Erwärmung der ersten Seite größer als 10³ Pas (=10⁴ Poise), vorzugsweise größer als 10⁴ Pas (=10⁵ Poise) bleibt.

4. Verfahren gemäß einem der vorstehenden Ansprüche, **dadurch gekennzeichnet, daß** bei der Erwärmung des Glasgegenstands von einer Temperatur des Glasgegenstands ausgegangen wird, bei welcher die Viskosität mindestens 10⁸ Pas (10⁹ Poise), besonders bevorzugt zumindest 10¹⁰ Pas (=10¹¹ Poise), insbesondere bevorzugt zumindest 10¹¹ Pas (= 10¹² Poise) beträgt.

5. Verfahren gemäß einem der vorstehenden Ansprüche, **dadurch gekennzeichnet, daß** die Oberfläche der ersten Seite (3) durch die Erwärmung nicht aufgeschmolzen wird.

6. Verfahren gemäß dem vorstehenden Anspruch, **dadurch gekennzeichnet, daß** die konvexe Seite der wannenförmigen Glasscheibe als erste Seite (3) zur Verbesserung der Thermoschockfestigkeit erwärmt wird.

7. Verfahren gemäß einem der vorstehenden Ansprüche,
**dadurch gekennzeichnet, daß** der wannenförmig umgebogene Rand (7) bei einer Temperatur verbleibt, bei welcher die Viskosität mindestens einen Wert von 10¹² Pas ( 10¹³ Poise) erreicht.

8. Verfahren gemäß einem der vorstehenden Ansprüche,
**dadurch gekennzeichnet, daß** der Glasgegenstand beim Beginn des Erwärmens der ersten Seite (3) mit erhöhter Temperatur, vorzugsweise mit einer Temperatur von zumindest 200°C, besonders bevorzugt bei einer Temperatur im Bereich des unteren Kühlpunkts (40) oder oberhalb des unteren Kühlpunkts (40) bereitgestellt wird.

9. Verfahren gemäß dem vorstehenden Anspruch, **dadurch gekennzeichnet, daß** das Erwärmen bis zu einer Temperatur, bei welcher die Viskosität einen Wert von 10 (6,65±2)Pas (=10(7,15±2) Poise) erreicht oder unterschreitet, im Anschluß an einen Heißformungsprozess durchgeführt wird, wobei zu Beginn des Erwärmens noch Restwärme vom Heißformungsprozess vorhanden ist.

10. Verfahren gemäß dem vorstehenden Anspruch, **dadurch gekennzeichnet, daß** eine linienförmige Heizquelle zur Erwärmung verwendet wird, wobei die erste Seite quer zur Längsrichtung der linienförmigen Heizquelle überstrichen wird.

11. Verfahren gemäß dem vorstehenden Anspruch, **dadurch gekennzeichnet, daß** die erste Seite (3) mit zumindest zwei hintereinander angeordneten linienförmigen Heizquellen (11, 13), insbesondere einem doppelreihigen Brenner überstrichen wird.

12. Verfahren gemäß einem der vorstehenden Ansprüche, **dadurch gekennzeichnet, daß** die Erwärmung der ersten Seite des Glasgegenstands durch einen Brenner (11, 13) mit zumindest einer Düse erfolgt, dessen Flamme die erste Seite des Glasgegenstands überstreicht.

13. Verfahren gemäß dem vorstehenden Anspruch, **dadurch gekennzeichnet, daß** die Erwärmung der ersten Seite mit einem Brenner (11, 13) mit einer linienförmigen Düse und/oder einem Brenner (11, 13) mit mehreren nebeneinander und/ oder hintereinander angeordneten Düsen erfolgt.

14. Verfahren gemäß einem der vorstehenden Ansprüchen, **dadurch gekennzeichnet, daß** der Glasgegenstand in einem Nachwärmeprozess entspannt wird.

15. Verfahren gemäß einem der vorstehenden Ansprüche, **dadurch gekennzeichnet, daß** der Glasgegenstand nach dem Erwärmen zum Abbau mechanischer Spannungen bei einer Temperatur im Bereich oberhalb des unteren Kühlpunkts (40), vorzugsweise zwischen dem oberen (41) und unteren Kühlpunkt gehalten (40) wird.

16. Verfahren gemäß einem der vorstehenden Ansprüche, **dadurch gekennzeichnet, daß** ein Glasgegenstand mit einem Glas, welches einen thermischen Längenausdehnungskoeffizienten von 1^{∗} 10⁻⁶ K⁻¹ bis 10 ^{∗} 10⁻⁶ K⁻¹, insbesondere mit einem thermischen Längenausdehnungskoeffizienten im Bereich von 2^{∗} 10⁻⁶ K⁻¹ bis 5 ^{∗} 10⁻⁶ K⁻¹ aufweist, verwendet und dessen Thermoschockfestigkeit verbessert wird.

17. Innenscheibe (1) eines Gargeräts, herstellbar mit einem Verfahren gemäß einem der vorstehenden Ansprüche, umfassend eine Glasscheibe mit einer Innenseite (3) und einer Außenseite (5), **dadurch gekennzeichnet, daß** der Rand (7) der Innenscheibe (1) wannenförmig umgebogen ist, so daß die Innenseite (3) der Innenscheibe (1) konvex geformt ist, wobei zumindest der Mittenbereich (9) der Innenseite (3) der Innenscheibe durch oberflächliche Erwärmung auf eine Temperatur, bei welcher die Viskosität einen Wert 10 (6,65±2)Pas (=10 ^{(7,65±2)} Poise) erreicht oder unterschreitet, behandelt ist, so daß die Innenscheibe (1) einem Abschrecktest ohne Brechen standhält, bei welchem die Innenscheibe (1) durch einen auf zumindest 240°C aufgeheizten Raum, welcher durch die Innenseite (3) der Innenscheibe (1) begrenzt wird, aufgeheizt wird, und wobei dann 0,2 Liter Wasser mit einer Temperatur von 15±5 °C innerhalb von 5 Sekunden auf die Mitte der Innenseite (3) gegossen werden.

18. Innenscheibe gemäß dem vorstehenden Anspruch, **dadurch gekennzeichnet, daß** die Innenscheibe (1) den Abschrecktest besteht, nachdem die Innenscheibe (1) ein- oder mehrmalig auf zumindest 480°C aufgeheizt und wieder abgekühlt wurde.

19. Innenscheibe gemäß einem der beiden vorstehenden Ansprüche, **dadurch gekennzeichnet, daß** die Innenscheibe (1) einem Abschrecktest ohne Brechen standhält, bei welchem die Innenscheibe (1) durch einen auf 300°C aufgeheizten Raum, welcher durch die Innenseite (3) der Innenscheibe (1) begrenzt wird, aufgeheizt wird, und wobei dann 0,2 Liter Wasser mit einer Temperatur von 15±5 °C innerhalb von 5 Sekunden auf die Mitte der Innenseite (3) gegossen werden.

20. Innenscheibe gemäß einem der vier vorstehenden Ansprüche, **dadurch gekennzeichnet, daß** die Innenscheibe (1) eine oder mehrere Öffnungen (11) aufweist.

21. Innenscheibe gemäß dem vorstehenden Anspruch, **dadurch gekennzeichnet, daß** im wannenförmig umgebogenen Rand (7) der Innenscheibe zumindest eine Öffnung (11) vorhanden ist.

22. Innenscheibe gemäß dem vorstehenden Anspruch, **dadurch gekennzeichnet, daß** im vom wannenförmig umgeformten Rand (7) umgebenen Mittenbereich der Innenscheibe zumindest eine Öffnung (11) vorhanden ist.

23. Glasscheibenpaket (20) mit einer Innenscheibe (1) gemäß einem der sechs vorstehenden Ansprüche und einer weiteren Scheibe (2), wobei die Innenscheibe mit dem wannenförmig umgebogenen Rand (7) an der weiteren Scheibe (2) befestigt ist, so daß ein Zwischenraum (23) zwischen den beiden Scheiben (1, 2) gebildet wird.

24. Haushalts-Gargerätetür mit einer Innenscheibe (1) oder einem Glasscheibenpaket (20) gemäß einem der sieben vorstehenden Ansprüche.

## Claims

1. A method for producing a glass article in the form of a cooking appliance inner pane with improved thermal shock resistance, wherein a glass article is formed, which has a first face (3) and an opposite second face (5) and a tray-type angled rim (7);
**characterized in that** the glass article is heated superficially on the first face (3), starting from a surface temperature below the softening point (42) until viscosity reaches or falls below a value of 10^{(6,65±2)} Pa·s (=10^{(7,65±2)} Poise), so that thermal shock resistance of the glass article is increased on the first face (3);
wherein said heating starting from a surface temperature below the softening point (42) to a temperature at which the viscosity reaches or falls below a value of 10^{(6,65±2)} Pa·s
(= 10^{(7,65±2)} Poise) is performed in one or more heating steps, each one with the duration of less than 2 seconds, measured at a point on the surface; and
wherein the heating is performed using a local heating source by sweeping it over the first face of the glass article.

2. The method according to the preceding claim, **characterized in that** the glass article is heated with a temperature gradient perpendicular to the surface so that at least part of the article below the heated surface, preferably the opposite second face (5) of the glass article, remains at a temperature below the softening point (42).

3. The method according to the preceding claim, **characterized in that** the viscosity of the glass article on the first face (3) remains greater than 10³ Pa·s
(= 10⁴ Poise), preferably greater than 10⁴ Pa·s (= 10⁵ Poise) when the first face is heated.

4. The method according to any one of the preceding claims, **characterized in that** the heating of the glass article starts at a temperature of the glass article at which the viscosity is at least 10⁸ Pa·s (= 10⁹ Poise), more preferably at least 10¹⁰ Pa·s (= 10¹¹ Poise), most preferably at least 10¹¹ Pa·s (= 10¹² Poise).

5. The method according to any one of the preceding claims, **characterized in that**
the surface of the first face (3) is not melted by said heating.

6. The method according to the preceding claim, **characterized in that**
the side that is heated as the first face (3) in order to improve thermal shock resistance is the convex side of the tray-type glass pane.

7. The method according to any one of the preceding claims, **characterized in that**
the tray-type angled rim (7) remains at a temperature at which the viscosity reaches at least a value of 10¹² Pa·s (= 10¹³ Poise).

8. The method according to any one of the preceding claims, **characterized in that**
at the beginning of the heating of the first face (3), the glass article is provided at an elevated temperature, preferably at a temperature of at least 200 °C, most preferably at a temperature close to the strain point (40) or above the strain point (40).

9. The method according to the preceding claim, **characterized in that**
the heating to a temperature at which the viscosity reaches or falls below a value of 10^{(6,65±2)} Pa·s (= 10^{(7,65±2)} Poise) is performed subsequently to a hot forming process, with residual heat from the hot forming process still prevailing at the beginning of the heating.

10. The method according to the preceding claim, **characterized in that**
a linear heating source is used for the heating, which sweeps over the first face transversely to the longitudinal extension of the linear heating source.

11. The method according to the preceding claim, **characterized in that**
at least two linear heating sources (11, 13) arranged one behind the other, in particular a double-row burner, is used to sweep over the first face (3).

12. The method according to any one of the preceding claims, **characterized in that**
the heating of the first face of the glass article is performed using a burner (11, 13) having at least one nozzle with a flame which sweeps over the first face of the glass article.

13. The method according to the preceding claim, **characterized in that**
the first face is heated using a burner (11, 13) having a linear nozzle and/or a burner (11, 13) having a plurality of nozzles arranged side by side and/or one behind the other.

14. The method according to any one of the preceding claims, **characterized in that**
the glass article is stress-relieved in a post-heating process.

15. The method according to any one of the preceding claims, **characterized in that**
after the heating, the glass article is maintained at a temperature in a range above the strain point (40), preferably between the annealing point (41) and the strain point (40), to relieve mechanical stresses.

16. The method according to any one of the preceding claims, **characterized in that**
a glass article is used which is made of a glass having a coefficient of linear thermal expansion of 1 ^{∗} 10⁻⁶ K⁻¹ to 10 ^{∗} 10⁻⁶ K⁻¹, in particular having a coefficient of linear thermal expansion in the range from 2 ^{∗} 10⁻⁶ K⁻¹ to 5 ^{∗} 10⁻⁶ K⁻¹, and the thermal shock resistance thereof is improved.

17. An inner pane (1) of a cooking appliance, producible by a method according to any one of the preceding claims, comprising a glass pane having an inner surface (3) and an outer surface (5), **characterized in that** the rim (7) of the inner pane (1) is angled in a tray-type manner, so that the inner surface (3) of the inner pane (1) has a convex shape, wherein at least the central area (9) of the inner surface (3) of the inner pane has been treated by heating the surface thereof to a temperature at which the viscosity reaches or falls below a value of 10^{(6,65±2)} Pa·s (= 10^{(7.65±2)} Poise), so that the inner pane (1) withstands a quenching test without breaking, in which quenching test the inner pane (1) is heated by a space being limited by the inner surface (3) of the inner pane (1) and heated to at least 240 °C, and then 0.2 litre of water at a temperature of 15 ± 5 °C is poured onto the centre of the inner surface (3) within 5 seconds.

18. The inner pane according to the preceding claim, **characterized in that**
the inner pane (1) passes the quenching test after the inner pane (1) has been heated up to at least 480 °C and cooled down once or several times,

19. The inner pane according to any one of the two preceding claims, **characterized in that**
the inner pane (1) withstands a quenching test without breaking, in which quenching test the inner pane (1) is heated by a space being limited by the inner surface (3) of the inner pane (1) and heated to 300 °C, and then 0.2 litre of water at a temperature of 15 ± 5 °C is poured onto the centre of the inner surface (3) within 5 seconds.

20. The inner pane according to any one of the four preceding claims, **characterized in that**
the inner pane (1) has one or more openings (11).

21. The inner pane according to the preceding claim, **characterized in that**
at least one opening (11) is provided in the tray-type angled rim (7) of the inner pane.

22. The inner pane according to the preceding claim, **characterized in that**
at least one opening (11) is provided in the central area of the inner pane surrounded by the tray-type formed rim (7).

23. A glass pane package (20) comprising an inner pane (1) according to any one of the six preceding claims and a further pane (2), wherein the inner pane with the tray-type angled rim (7) is fixed to the further pane (2) such that an intermediate space (23) is defined between the two panes (1, 2).

24. A door of a household cooking appliance, comprising an inner pane (1) or a glass pane package (20) according to any one of the seven preceding claims.

## Revendications

1. Procédé de fabrication d'un objet en verre, sous la forme d'une vitre intérieure d'appareils de cuisson à résistance améliorée aux chocs thermiques, selon lequel on forme un objet en verre qui présente une première face (3) et une deuxième face (5) opposée et un bord (7) incurvé en forme de cuvette, **caractérisé en ce que**, partant d'une température de surface qui est inférieure au point de ramollissement (42), l'objet en verre est chauffé en surface sur la première face (3), jusqu'à ce que la viscosité atteigne une valeur de 10^{(6,65±2)} Pas (= 10^{(7,65±2)} Poise) ou passe en dessous de cette valeur, de sorte que la résistance aux chocs thermiques de l'objet en verre est augmentée sur la première face (3), sachant que le chauffage est réalisé en une ou plusieurs étapes de chauffage dont la durée, mesurée en un point de la surface, est respectivement inférieure à 2 secondes, en partant d'une température de surface qui est inférieure au point de ramollissement (42), jusqu'à une température à laquelle la viscosité atteint une valeur de 10^{(6,65±2} Pas (= 10^{(7,65±2)} Poise) ou passe en dessous de cette valeur, et sachant que le chauffage est réalisé au moyen d'une source de chauffage locale avec laquelle on balaie la première face de l'objet en verre.

2. Procédé selon la revendication précédente, **caractérisé en ce que** l'objet en verre est chauffé avec un gradient de température perpendiculaire à la surface, de sorte qu'au moins une partie de l'objet située sous la surface chauffée, de préférence la deuxième face (5) située en vis-à-vis, de l'objet en verre reste à une température qui est inférieure au point de ramollissement (42).

3. Procédé selon la revendication précédente, **caractérisé en ce que** lors du chauffage de la première face, la viscosité de l'objet en verre, sur la première face (3), reste supérieure à 10³ Pas (= 10⁴ Poise), de préférence supérieure à 10⁴ Pas (= 10⁵ Poise).

4. Procédé selon l'une des revendications précédentes, **caractérisé en ce que** lors du chauffage de l'objet en verre, on part d'une température de l'objet en verre à laquelle la viscosité est au moins de 10⁸ Pas (= 10⁹ Poise), notamment au moins de 10¹⁰ Pas (= 10¹¹ Poise), et de façon particulièrement avantageuse au moins de 10¹¹ Pas (= 10¹² Poise).

5. Procédé selon l'une des revendications précédentes, **caractérisé en ce que** la surface de la première face (3) n'est pas mise en fusion par le chauffage.

6. Procédé selon la revendication précédente, **caractérisé en ce que** la face convexe de la plaque de verre en forme de cuvette est chauffée en tant que première face (3), aux fins d'améliorer la résistance aux chocs thermiques.

7. Procédé selon l'une des revendications précédentes, **caractérisé en ce que** le bord (7) incurvé en forme de cuvette reste à une température à laquelle la viscosité atteint au moins une valeur de 10¹² Pas (= 10¹³ Poise).

8. Procédé selon l'une des revendications précédentes, **caractérisé en ce que**, au début du chauffage de la première face (3), l'objet en verre est préparé avec une température accrue, de préférence avec une température d'au moins 200 °C, et de façon particulièrement avantageuse avec une température de l'ordre du point de refroidissement inférieur (40) ou supérieure au point de refroidissement inférieur (40).

9. Procédé selon la revendication précédente, **caractérisé en ce que** le chauffage est effectué jusqu'à une température à laquelle la viscosité atteint une valeur de 10^{(6,65±2)} Pas (= 10^{(7,65±2)} Poise) ou passe en dessous de cette valeur, à la suite d'un processus de formage à chaud, sachant qu'au début du chauffage, il existe encore une chaleur résiduelle provenant du processus de formage à chaud.

10. Procédé selon la revendication précédente, **caractérisé en ce que** l'on utilise une source de chauffage linéaire pour le chauffage, en balayant la première face transversalement au sens longitudinal de la source de chauffage linéaire.

11. Procédé selon la revendication précédente, **caractérisé en ce que** la première face (3) est balayée avec au moins deux sources de chauffage (11, 13) linéaires disposées l'une derrière l'autre, en particulier avec un brûleur à deux rangées.

12. Procédé selon l'une des revendications précédentes, **caractérisé en ce que** le chauffage de la première face de l'objet en verre est effectué à l'aide d'un brûleur (11, 13) qui est doté d'au moins une buse et dont la flamme balaie la première face de l'objet en verre.

13. Procédé selon la revendication précédente, **caractérisé en ce que** le chauffage de la première face est effectué à l'aide d'un brûleur (11, 13) doté d'une buse linéaire et/ou à l'aide d'un brûleur (11, 13) doté de plusieurs buses disposées les unes à côté des autres et/ou les unes derrière les autres.

14. Procédé selon l'une des revendications précédentes, **caractérisé en ce que** l'objet en verre est recuit au cours d'un processus de réchauffage.

15. Procédé selon l'une des revendications précédentes, **caractérisé en ce que**, après le chauffage destiné à relâcher les tensions mécaniques, l'objet en verre est maintenu à une température située dans la plage au-dessus du point de refroidissement inférieur (40), de préférence entre le point de refroidissement supérieur (41) et le point de refroidissement inférieur (40).

16. Procédé selon l'une des revendications précédentes, **caractérisé en ce que** l'on utilise un objet en verre avec un verre présentant un coefficient de dilatation thermique longitudinale allant de 1^{∗} 10⁻⁶ K⁻¹ à 10^{∗} 10⁻⁶ K⁻¹, en particulier avec un coefficient de dilatation thermique longitudinale allant de 2^{∗} 10⁻⁶ K⁻¹ à 5^{∗} 10⁻⁶ K⁻¹, et on améliore la résistance aux chocs thermiques de celui-ci.

17. Vitre intérieure (1) d'un appareil de cuisson, pouvant être fabriquée avec un procédé selon l'une des revendications précédentes, comprenant une plaque de verre avec une face interne (3) et une face externe (5), **caractérisée en ce que** le bord (7) de la vitre intérieure (1) est incurvé en forme de cuvette, de sorte que la face interne (3) de la vitre intérieure (1) présente une forme convexe, sachant qu'au moins la zone centrale de la face interne (3) de la vitre intérieure est traitée par chauffage superficiel pour être amenée à une température à laquelle la viscosité atteint une valeur de 10^{(6,65±2)} Pas (= 10^{(7.65±2)} Poise) ou passe en dessous de cette valeur, de sorte que la vitre intérieure (1) résiste à un essai de trempe sans se briser, lors duquel la vitre intérieure (1) est chauffée par un espace qui est chauffé à au moins 240 °C et est délimité par la face interne (3) de la vitre intérieure (1), et sachant que l'on verse ensuite 0,2 litre d'eau à une température de 15±5 C° en l'espace de 5 secondes sur le centre de la face interne (3).

18. Vitre intérieure selon la revendication précédente, **caractérisée en ce que** la vitre intérieure (1) résiste à l'essai de trempe, après que la vitre intérieure (1) a été chauffée une ou plusieurs fois à au moins 480 °C, puis a été refroidie.

19. Vitre intérieure selon l'une des deux revendications précédentes, **caractérisée en ce que** la vitre intérieure (1) résiste à un essai de trempe sans se briser, lors duquel la vitre intérieure (1) est chauffée par un espace qui est chauffé à 300 °C et est délimité par la face interne (3) de la vitre intérieure (1), et sachant que l'on verse ensuite 0,2 litre d'eau à une température de 15±5 °C en l'espace de 5 secondes sur le centre de la face interne (3).

20. Vitre intérieure selon l'une des quatre revendications précédentes, **caractérisée en ce que** la vitre intérieure (1) présente une ou plusieurs ouvertures (11).

21. Vitre intérieure selon la revendication précédente, **caractérisée en ce que** le bord (7), incurvé en forme de cuvette, de la vitre intérieure comporte au moins une ouverture (11).

22. Vitre intérieure selon la revendication précédente, **caractérisée en ce que** la zone centrale de la vitre intérieure, qui est entourée par le bord (7) incurvé en forme de cuvette, comporte au moins une ouverture (11).

23. Paquet de plaques de verre (20) comprenant une vitre intérieure (1) selon l'une des six revendications précédentes et une vitre (2) supplémentaire, dans lequel la vitre intérieure est fixée à la vitre (2) supplémentaire par le bord (7) incurvé en forme de cuvette, de manière à former un espace entre les deux vitres (1, 2).

24. Porte d'appareil de cuisson ménager, comprenant une vitre intérieure (1) ou un paquet de plaques de verre (20) selon l'une des sept revendications précédentes.
